Europäisches Patentamt

European Patent Office

Office européen des brevets

(11) Veröffentlichungsnummer: **0 464 977 A1**

## (12) EUROPÄISCHE PATENTANMELDUNG

(21) Anmeldenummer: **91250179.8**

(22) Anmeldetag: **03.07.91**

(51) Int. Cl.⁵: **G01F 23/16**, G01F 23/30, G01F 23/68, G01F 23/76

(30) Priorität: **03.07.90 DD 342459**
**03.07.90 DD 342461**

(43) Veröffentlichungstag der Anmeldung:
**08.01.92 Patentblatt 92/02**

(84) Benannte Vertragsstaaten:
**AT BE DE DK ES FR GB IT LU NL SE**

(71) Anmelder: **ZENTRALINSTITUT FÜR FESTKÖRPERPHYSIK UND WERKSTOFFORSCHUNG**
**Helmholtzstrasse 20**
**O-8027 Dresden(DE)**

Anmelder: **DRAHT- UND SCHRAUBENWERKE GMBH**
**Clara-Zetkin-Strasse 28**
**O-7980 Finsterwalde(DE)**

(72) Erfinder: **Weinhold, Harri**
**Am Schäferberg 5a**
**O-8216 Kreischa(DE)**

Erfinder: **Rösch, Günter**
**Stralsunder Strasse 2a**
**O-8400 Riesa(DE)**
Erfinder: **Rauschenbach, Dieter**
**Sadisdorfer Weg 2a**
**O-8027 Dresden(DE)**
Erfinder: **Gehre, Dietmar**
**Hans-Beimler-Strasse 19**
**O-8400 Riesa(DE)**
Erfinder: **Vogel, Heinz-Rüdiger**
**Augsburger Strasse 47**
**O-8019 Dresden(DE)**
Erfinder: **Reichert, Jürgen**
**Tauscher Strasse 27**
**O-8021 Dresden(DE)**
Erfinder: **Nerger, Dieter**
**Otto-Dix-Ring 15**
**O-8020 Dresden(DE)**
Erfinder: **Genest, Harald**
**Birkenstrasse 33**
**O-8038 Dresden(DE)**

(54) **Füllstandsmesser mit Korrosions- und Verkrustungsschutz.**

(57) Die Erfindung bezieht sich auf das Gebiet der Meßtechnik und betrifft einen Füllstandsmesser für korrosive, zur Hautbildung oder zu Verkrustungen neigende Flüssigkeiten. Der Erfindung liegt die Aufgabe zugrunde, einen Füllstandsmesser, bei dem in einem in die Flüssigkeit (10) ragenden Tauchzylinder (2) eine Niveaumeßeinrichtung (3; 4; 5) angeordnet ist, die mit einem Schwimmkörper gekoppelt sein kann, so auszubilden, daß die Funktion der Niveaumeßeinrichtung (3; 4; 5) durch die Flüssigkeit (10) nicht beeinträchtigt wird. Erfindungsgemäß wird die Niveaumeßeinrichtung (3; 4; 5) gegenüber der Flüssigkeit (10) abgeschottet, indem der Schwimmkörper selbsttätig dichtend und gleitfähig in den Tauchzylinder eingepaßt ist oder indem der Tauchzylinder (2) flüssigkeitsdicht mit einer flexiblen Folie (7) verschlossen ist. Diese kann mit dem Schwimmkörper verbunden sein. Über der Folie (7) kann sich auch eine andere, nicht korrosive und nicht zur Hautbildung oder zu Verkrustungen neigende zweite Flüssigkeit (11) befinden, die als Steuermedium für die Niveaumeßeinrichtung (3; 4; 5) dient.

EP 0 464 977 A1

Fig.1

Die Erfindung bezieht sich auf das Gebiet der Meßtechnik und betrifft einen Füllstandsmesser für korrosive, zur Hautbildung oder zu Verkrustungen neigende Flüssigkeiten.

Es sind bereits Füllstandsmesser für Flüssigkeiten in verschiedenen Ausführungen bekannt. Bei einer Ausführungsart ist in einem in die Flüssigkeit ragenden offenen Tauchzylinder ein Schwimmkörper angeordnet. Oberhalb des Schwimmkörpers befindet sich eine Niveaumeßeinrichtung in Form übereinander angeordneter elektrische Schaltkontakte, die berührungslos von einem mit dem Schwimmkörper in Verbindung stehenden Permanentmagneten betätigt werden und so die Füllhöhe signalisieren (Erzeugnisdokumentation LS 6 STEREMAT Berlin 8/8). Anstelle dieser technischen Mittel können in dem Tauchzylinder auch andere Niveaumeßeinrichtungen, beispielsweise kapazitive Fühler, verwendet werden.

Der Einsatz dieser Füllstandsmesser in korrosiven Flüssigkeiten setzt die Verwendung von meist teuren korrosionsbeständigen Werkstoffen voraus. Beim Einsatz in zur Hautbildung oder zu Verkrustungen neigenden Flüssigkeiten sind diese Füllstandsmesser nicht funktionsfähig oder arbeiten ungenau und nicht störungsfrei, da die Funktion der Niveaumeßeinrichtung durch die Haut oder Verkrustung beeinträchtigt wird.

Das Ziel der Erfindung besteht in der Schaffung eines kostengünstig herstellbaren, möglichst universell einsetzbaren Füllstandsmessers für Flüssigkeiten.

Der Erfindung liegt die Aufgabe zugrunde, einen Füllstandsmesser für Flüssigkeiten, bei dem in einem in die Flüssigkeit ragenden Tauchzylinder eine Niveaumeßeinrichtung angeordnet ist, die mit einem Schwimmkörper gekoppelt sein kann, so auszubilden, daß die Niveaumeßeinrichtung beim Einsatz des Füllstandsmessers in korrosiven oder hautbildenden oder zu Verkrustungen neigenden Flüssigkeiten in ihrer Funktionsfähigkeit nicht beeinträchtigt wird.

Diese Aufgabe ist nach der Erfindung dadurch gelöst, daß zur Abschottung der Niveaumeßeinrichtung gegenüber der Flüssigkeit der Schwimmkörper selbsttätig dichtend und gleitfähig in den Tauchzylinder eingepaßt oder der Tauchzylinder flüssigkeitsdicht mit einer flexiblen Folie verschlossen ist, die mit dem Schwimmkörper verbunden sein kann oder über der sich eine andere, nicht korrosive und nicht zur Hautbildung oder zu Verkrustungen neigende zweite Flüssigkeit befindet, die als Steuermedium für die Niveaumeßeinrichtung dient.

Nach einer zweckmäßigen Ausgestaltung der Erfindung ist die flexible Folie als Foliebeutel oder Foliefaltenbalg ausgebildet. Der Foliebeutel kann mit einem Schutzsieb umgeben sein.

Zur seitlichen Ableitung von in der Flüssigkeit aufsteigenden Gasblasen, die z.B. im Falle einer Erwärmung der Flüssigkeit auftreten können, kann nach der Erfindung unterhalb des Tauchzylinders ein Blech horizontal angeordnet sein.

Erfindungsgemäß weist die über der flexiblen Folie befindliche andere Flüssigkeit annähernd die Dichte der außerhalb des Tauchzylinders vorhandenen Flüssigkeit auf. Zweckmäßig kann die über der flexiblen Folie befindliche Flüssigkeitssäule aus zwei oder mehreren übereinander geschichteten Flüssigkeiten bestehen, die sich in ihrer Dichte unterscheiden. Vorteilhaft ist es dabei, wenn die Flüssigkeitssäule im unteren Teil aus Wasser besteht, über dem sich eine Glyzerinschicht befindet.

Für den Fall des Auftretens von Dämpfen oberhalb der über der flexiblen Folie befindlichen anderen Flüssigkeit ist der Tauchzylinder mit einer oder mehreren Öffnungen versehen, durch die der Dampf entweichen kann, und/oder sind über dem Flüssigkeitsspiegel im Tauchrohr Kühlelemente zur Dampfkondensation angeordnet.

Zur weitestgehenden Vermeidung des Entstehens von Dämpfen können in den über der flexiblen Folie befindlichen Flüssigkeit auch Kühlelemente angeordnet sein.

Durch die erfindungsgemäße Ausbildung des Füllstandsmessers ist gesichert, daß sich innerhalb des Tauchzylinders eine die Funktionsweise des Schwimmers beeinträchtigende Haut oder Kruste nicht bilden kann, bzw. daß die im Tauchzylinder angeordnete Niveaumeßeinrichtung gegenüber korrosiven Flüssigkeiten abgeschirmt ist.

Die Erfindung ist nachstehend anhand von Ausführungsbeispielen und zugehörigen Zeichnungen näher erläutert.

Beispiel 1

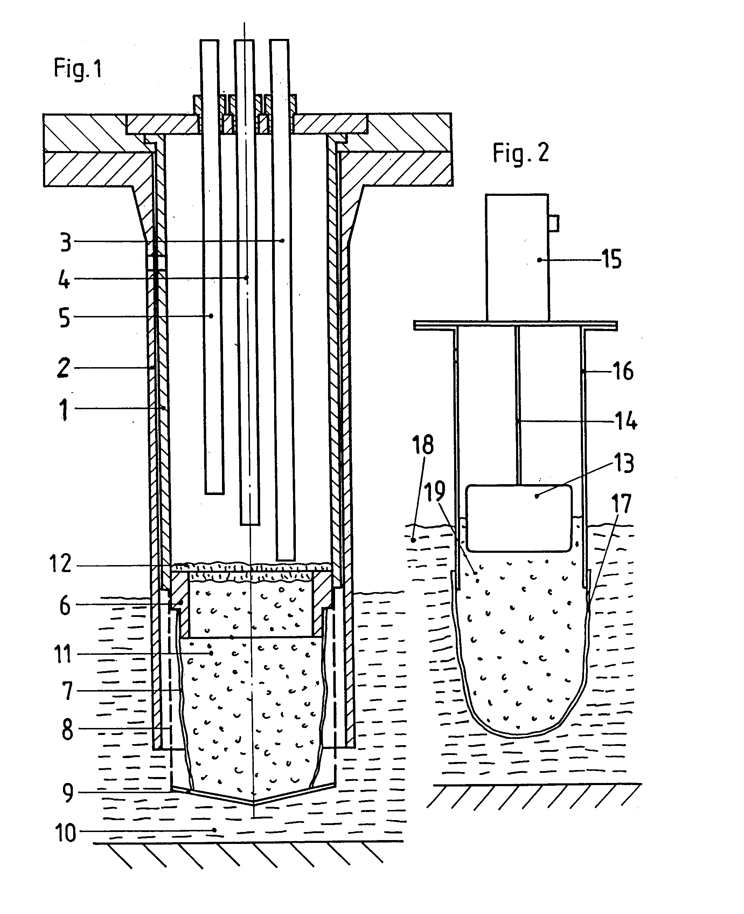

Bei dem in Fig. 1 dargestellten Füllstandsmesser ist an einem Halterohr 1 ein Tauchzylinder 2 befestigt. Im Halterohr 1 sind drei kapazitive Sensoren 3; 4; 5 angeordnet. In das untere Ende des Halterohrs 1 ist ein Haltering 6 eingepaßt, den ein Foliebeutel 7 verschließt. Außerdem ist am Haltering 6 ein Schutzsieb 8 aus Bronzegewebe befestigt, das den Foliebeutel 7 umgibt. Das Schutzsieb 8 weist an seinem unteren Ende ein Blech 9 zur Ableitung von in der Flüssigkeit 10 aufsteigenden Gasblasen über den Rand des Foliebeutels 7 hinaus auf. Die Flüssigkeit 10 besteht aus einem auf etwa 80 ºC erwärmten zur Hautbildung neigenden wässrigen Schmiermittel für die Kaltumformung. Innerhalb des Foliebeutels 7 befindet sich Wasser 11, auf dem eine Glyzerinschicht 12 schwimmt, welche das Entweichen von Wasserdampf weitestgehend verhindert. Niveauveränderungen bei der Flüssigkeit 10 übertragen sich auf Grund der Flexibilität des Foliebeutels 7 analog auf das Niveau der darin befindlichen Flüssigkeit und werden mit den Sensoren 3; 4; 5 meßtechnisch erfaßt.

Beispiel 2

Der in Fig. 2 gezeigte Füllstandsmesser ist mit einem Schwimmer 13 als Füllstandssensor ausgerüstet, der über eine Stange 14 und einem daran befindlichen, in der Zeichnung nicht dargestellten Permanentmagneten elektrische Schaltkontakte betätigt, welche in einer Haube 15 angeordnet sind. Der Schwimmer 13 befindet sich in einem Tauchzylinder 16, dessen unteres Ende mit einem Foliebeutel 17 verschlossen ist. Über diesem wird das Niveau einer äußeren Flüssigkeit 18 analog auf das Niveau einer im Foliebeutel 17 befindlichen inneren Flüssigkeit 19, die den Schwimmer 13 trägt, übertragen. Die äußere Flüssigkeit 18 kann beispielsweise ein zur Hautbildung neigendes wässriges Schmiermittel und die innere Flüssigkeit 19 Wasser sein.

Beispiel 3

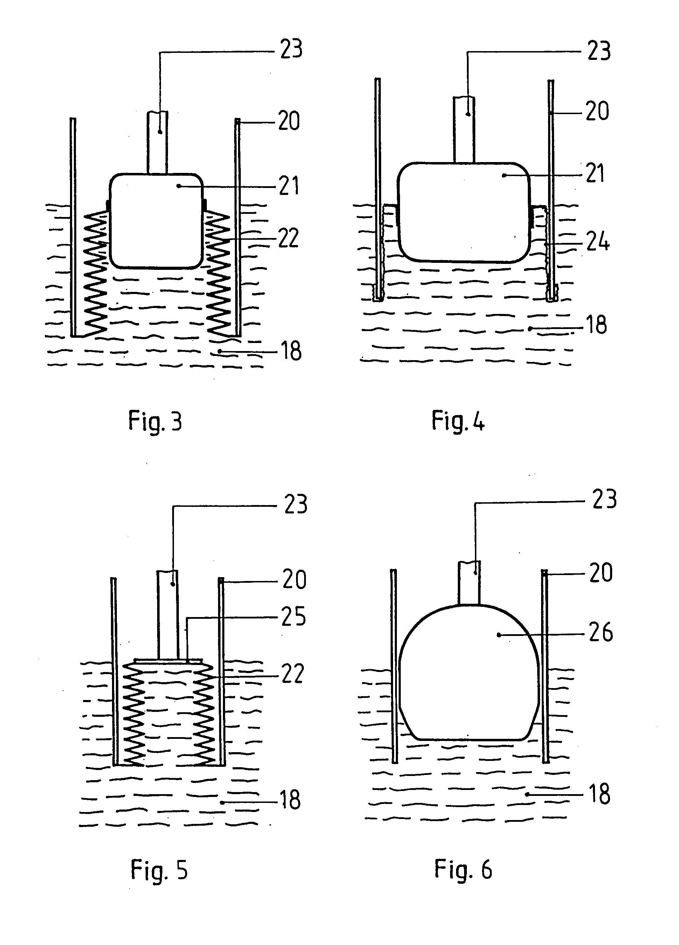

Bei dem Füllstandsmesser gemäß Fig. 3 ist in einem Tauchzylinder 20 ein Schwimmkörper 21 angeordnet, wobei sich zwischen diesem und der Tauchrohrinnenwand ein Foliefaltenbalg 22 befindet, der den Luftzutritt aus dem Tauchzylinder 20 zur Flüssigkeit 18 verhindert. Dadurch ist eine Haut- oder Krustenbildung durch die Flüssigkeit 18 im Tauchzylinder 20 vermieden. Der Foliefaltenbalg 22 ist so flexibel ausgeführt, daß er eine Vertikalbewegung des Schwimmkörpers 21 nicht wesentlich behindert. Am Schwimmkörper 21 ist ein Meßstab 23 befestigt, der mittels eines in der Zeichnung nicht dargestellten Permanentmagneten elektrische Schaltkontakte betätigt, die den jeweiligen Füllstand signalisieren.

Beispiel 4 bis 6

Der Füllstandsmesser gemäß Fig. 4 entspricht in seinem prinzipiellen Aufbau dem des in Fig. 3 dargestellten, wobei an Stelle eines Foliefaltenblags ein Foliebeutel 24 zwischen Tauchzylinder 20 und Schwimmkörper 21 angeordnet ist. Beim Füllstandsmesser nach Fig. 5 ist für einen Schwimmkörper eine Meßstabgrundplatte 25 verwendet, an der der Meßstab 23 befestigt ist. Meßstabgrundplatte 23 und Tauchzylinderinnenwand sind mittels eines Foliefaltenbalgs 22 flüssigkeitsdicht verbunden. Bei dem Füllstandsmesser entsprechend Fig. 6 ist in den Tauchzylinder 20 ein Schwimmkörper 26 selbsttätig dichtend und vertikal gleitfähig eingepaßt.

Bei den Füllstandsmessern der Beispiele 3 bis 6 kann horizontal unterhalb des Tauchzylinders 20 ein in der Zeichnung nicht dargestelltes Blech zur Ableitung von in der Flüssigkeit 18 aufsteigenden Gasblasen angeordnet sein, das über den Rand des Tauchzylinders 20 ragt. Dadurch wird eine das Meßergebnis verfälschende Gasansammlung im Tauchzylinder 20 vermieden.

**Patentansprüche**

1. Füllstandsmesser für korrosive, zur Hautbildung oder zu Verkrustung neigende Flüssigkeiten, bei dem in einem in die Flüssigkeit ragenden Tauchzylinder eine Niveaumeßeinrichtung, die mit einem Schwimmkörper gekoppelt sein kann, angeordnet ist, dadurch gekennzeichnet, daß zur Abschottung der Niveaumeßeinrichtung gegenüber der Flüssigkeit (10; 18) der Schwimmkörper (26) selbsttätig dichtend und gleitfähig in den Tauchzylinder (20) eingepaßt oder der Tauchzylinder (16; 20) flüssigkeitsdicht mit einer flexiblen Folie (7; 17; 22; 24) verschlossen ist, die mit dem Schwimmkörper (21) verbunden sein kann oder über der sich eine andere, nicht korrosive und nicht zur Hautbildung oder zu Verkrustungen neigende zweite Flüssigkeit (11; 19) befindet, die als Steuermedium für die Niveaumeßeinrichtung dient.

2. Füllstandsmesser nach Anspruch 1, dadurch gekennzeichnet, daß die flexible Folie als Foliebeutel (7; 17; 24) oder Foliefaltenbalg (22) ausgebildet ist.

3. Füllstandsmesser nach Anspruch 2, dadurch gekennzeichnet, daß der Foliebeutel (7) mit einem Schutzsieb (8) umgeben ist.

4. Füllstandsmesser nach Anspruch 1, dadurch gekennzeichnet, daß unterhalb des Tauchzylinders (2) ein Blech (9) zur Ableitung von in der Flüssigkeit (10) aufsteigenden Gasblasen horizontal angeordnet ist.

5. Füllstandsmesser nach Anspruch 1, dadurch gekennzeichnet, daß die über der flexiblen Folie (7; 17) befindliche andere Flüssigkeit (11; 19) annähernd die Dichte der außerhalb des Tauchzylinders (2; 16) vorhandenen Flüssigkeit (10; 18) aufweist.

6. Füllstandsmesser nach Anspruch 1 und 5, dadurch gekennzeichnet, daß die über der flexiblen Folie (7) befindliche Flüssigkeitssäule aus zwei oder mehreren übereinander geschichteten Flüssigkeiten (11; 12) besteht, die sich in ihrer Dichte unterscheiden.

**7.** Flüssigkeit nach Anspruch 6, dadurch gekennzeichnet, daß die über der flexiblen Folie (7) befindliche Flüssigkeitssäule im unteren Teil aus Wasser (11) besteht, über dem sich eine Glyzerinschicht (12) befindet.

**8.** Füllstandsmesser nach Anspruch 1, dadurch gekennzeichnet, daß für den Fall des Auftretens von Dämpfen oberhalb der über der flexiblen Folie (7; 17) befindlichen anderen Flüssigkeit (11; 19) der Tauchzylinder (2; 16) mit einer oder mehreren Öffnungen zum Entweichen des Dampfes versehen ist.

**9.** Füllstandsmesser nach Anspruch 1 und 5, dadurch gekennzeichnet, daß für den Fall des Auftretens von Dämpfen oberhalb der über der flexiblen Folie (7; 17) befindlichen anderen Flüssigkeit (12; 19) im Tauchzylinder (2; 16) über dem Flüssigkeitsspiegel Kühlelemente zum Zwecke der Dampfkondensation angeordnet sind.

**10.** Füllstandsmesser nach Anspruch 1 und 5, dadurch gekennzeichnet, daß zur weitestgehenden Vermeidung des Entstehens von Dämpfen, Kühlelemente in der über der flexiblen Folie (7; 17) befindlichen anderen Flüssigkeit (11; 19) angeordnet sind.

Fig.1

Fig. 2

Fig. 3

Fig. 4

Fig. 5

Fig. 6

# EUROPÄISCHER RECHERCHENBERICHT

Nummer der Anmeldung

**EP 91 25 0179**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 840 430  (ZAHNRADFABRIK FRIEDRICHSHAFEN) <br> * Spalte 1, Absätze 1,3; Patentanspruch 1; Figuren 1-3 * <br> – – – | 1 | G 01 F 23/16 <br> G 01 F 23/30 <br> G 01 F 23/68 <br> G 01 F 23/76 |
| X | GB-A-2 198 534  (COAL INDUSTRY LTD) <br> * Zusammenfassung; Seite 2, letzter Absatz - Seite 3, Absatz 2; Seite 6, Zeilen 7-10; Seite 7, letzter Absatz; Figur 3 * | 1,2 | |
| Y | | 1,2 | |
| A | | 3-10 | |
| | – – – | | |
| Y | EP-A-0 278 678  (PANDEL INSTRUMENTS) <br> * Seite 4, Absätze 3-6; Figur 2 * <br> – – – | 1,2 | |
| X | US-E-23 983  (LUPFER) <br> * Spalte 1, Absatz 1 - Spalte 2, Absatz 1; Figuren 1,2 * <br> – – – | 1,5 | |
| A | FR-A-2 468 107  (SOCIETE DE FABRICATION D'INSTRUMENTS DE MESURE) <br> * Gesamtes Dokument * <br> – – – – – | 1 | |

| RECHERCHIERTE SACHGEBIETE (Int. Cl.5) |
|---|
| G 01 F |

Der vorliegende Recherchenbericht wurde für alle Patentansprüche erstellt

| Recherchenort | Abschlußdatum der Recherche | Prüfer |
|---|---|---|
| Den Haag | 27 September 91 | PFLUGFELDER G.F. |